# EUROPÄISCHE PATENTANMELDUNG

(11) **EP 1 940 010 A1**
(43) Veröffentlichungstag der Anmeldung: **02.07.2008**
(21) Anmeldenummer: 07122697.1
(22) Anmeldetag: 10.12.2007
(51) Int. Cl.: H02K 5/14

(54) **Kommutatormotor und Verfahren zur Montage eines Kommutatormotors**

(30) Priorität: 29.12.2006 DE 102006062592
(71) Anmelder: ROBERT BOSCH GMBH, 70442 Stuttgart (DE)
(72) Erfinder: Hawighorst, Achim, 77830 Buehlertal (DE)

(57) **Zusammenfassung**

Die Erfindung betrifft einen Kommutatormotor mit einem eine Mehrzahl von Kommutatorlamellen (22) aufweisenden, auf einer Ankerwelle (16) eines Ankers (18) drehfest montierten Kommutator (20) und mit auf einem Bürstenträger (10, 100) montierten Bürsten (14, 56), die mittels Andruckmitteln (58) an die Kommutatorlamellen (22) anpressbar sind. Der Kommutatormotor ist dadurch gekennzeichnet, dass eine Montagevorrichtung (26) in Umfangrichtung des Kommutators (20) drehbar am Bürstenträger (10) befestigt ist, wobei die Montagevorrichtung (26) die Bürsten (14) vor dem Einbringen des Ankers (18) zurückhält, und nach dem Einbringen des Ankers (18) derart drehbar ist, dass sie die Bürsten (14) zum Anpressen durch die Andruckmittel (58) an die Kommutatorlamellen (22) freigibt. Des weiteren betrifft die Erfindung ein entsprechendes Verfahren zur Montage eines Kommutatormotors.

## Beschreibung

Die Erfindung betrifft einen Kommutatormotor sowie ein Verfahren zur Montage eines Kommutatormotors nach der Gattung der unabhängigen Ansprüche.

### Stand der Technik

Die Energieübertragung erfolgt bei Kommutatormotoren mittels Bürsten, die über geeignete Andruckmittel einen reibschlüssigen, elektrischen Kontakt zu einem eine Mehrzahl von Kommutatorlamellen aufweisenden, auf einer Ankerwelle eines Ankers drehfest montierten Kommutator herstellen, der seinerseits mit entsprechenden Wicklungen des Ankers elektrisch verbunden ist. Als Andruckmittel kommen dabei Spiral- oder Blattfedern oder dergleichen zum Einsatz, die an einem Bürstenträger befestigt sind und die die Bürsten derart mit einer Federkraft beaufschlagen, dass ihre Stirnflächen in der entspannten Ruhelage, also vor der Montage des Ankers, radial in Richtung des Ankerwellenmittelpunkts den gedachten Hüllkreis der Kommutatoroberfläche überschreiten.

Aufgrund der Vorspannung der Bürsten ergibt sich bei der Montage des Kommutatormotors das Problem, dass die Bürsten durch geeignete Mittel soweit gegen die Federkraft der Andruckmittel zurückgehalten werden müssen, dass der Kommutator durch eine Bohrung des Bürstenträgers ohne mechanischen Kontakt zu den Bürsten hindurchgeführt werden kann.

Aus der DE 198 21 053 A1 ist beispielsweise ein Montage-Rückhalterung der Bürsten bekannt, die eine axiale Montage des rotor- bzw. ankerseitigen Kommutators einerseits und des statorseitigen Bürstenhalters andererseits durch eine axial verschiebbare Schutzhülse ermöglicht, durch welche die Bürsten zunächst in einer Montage-Rückhaltestellung sicherbar und in der Betriebs-Endstellung des Kommutators zur Auflage auf dessen Kommutatoroberläche freigebbar sind.

Weiterhin ist aus der EP 1 469 566 A2 ein Rückhalteelement für die Bürsten eines Kommutatormotors bekannt, das als eine dünne elastische Kreisringscheibe mit am Umfang radial gerichteten und gegen deren Ebene abgewinkelt ausgebildeten, federnden Zungenlappen ausgebildet ist, deren Winkeleinteilung der Position der vorhandenen Bürsten entspricht. Bei der Montagerelativbewegung zwischen Anker einerseits und Bürstenträger andererseits wird vom Lager, das auf der Ankerwelle vor dem Kommutator sitzt, die Kreisringscheibe axial mitgenommen, wobei die Zungenlappen entriegelnd weggezogen und so die Bürsten zur Anlage an die Kommutatorlamellen freigegeben werden.

Aus der DE 196 19 807 A1 ist ein Bürstensperring bekannt, der die Bürsten eines Kommutatormotors während des Einführens des Kommutators zurückhält. Der Bürstensperring verfügt über einstückig angeformte Federklinken, die in die Bohrung des Rings vorstehen, wenn dieser eng in den Bürstenhalter des Kommutatormotors eingesetzt ist. Die Klinken bilden dadurch einen Anschlag für den Kommutator, wenn er während des Zusammenbauvorgangs des Kommutatormotors in die Bohrung des Rings eingeführt wird, wodurch der Ring vor dem Kommutator bei dessen Einführen axial bis zu einem Punkt weggeschoben wird, an dem er die Bürsten freigibt, die dadurch in ihre Betriebsstellung laufen.

### Offenbarung der Erfindung

Die Erfindung betrifft einen Kommutatormotor mit einem eine Mehrzahl von Kommutatorlamellen aufweisenden, auf einer Ankerwelle eines Ankers drehfest montierten Kommutator und mit auf einem Bürstenträger montierten Bürsten, die mittels Andruckmitteln an die Kommutatorlamellen anpressbar sind. Darüber hinaus betrifft die Erfindung ein Verfahren zur Montage eines entsprechenden Kommutatormotors. In vorteilhafter Weise ist eine Montagevorrichtung in Umfangrichtung des Kommutators drehbar am Bürstenträger befestigt, wobei die Montagevorrichtung die Bürsten vor dem Einbringen des Ankers zurückhält, und nach dem Einbringen des Ankers derart drehbar ist, dass sie die Bürsten zum Anpressen durch die Andruckmittel an die Kommutatorlamellen freigibt. Hieraus resultiert ein gegenüber dem Stand der Technik deutlich verringerter Bauraum. Zudem ist es möglich, den Anker unmittelbar nach der Montage wieder aus der Bohrung des Bürstenträgers zu entfernen, da die Freigabe der Bürsten unabhängig von dem Einschieben des Kommutators erfolgt.

Weitere Vorteile der Erfindung ergeben sich durch die in den abhängigen Ansprüchen angegebenen Merkmale sowie aus der Zeichnung und der nachfolgenden Beschreibung.

Um ein einfaches Halten der Bürsten vor bzw. eine einfach Freigabe der Bürsten nach dem Verdrehen der Montagevorrichtung zu gewährleisten, weist diese entsprechende Haltezungen und/oder Aussparungen auf. Eine sehr einfache Handhabung ergibt sich, wenn die Montagevorrichtung vor dem Einbringen des Ankers in den Bürstenträger eingesteckt wird, wobei mittels der axialen Führung eine Bewegung der Montagevorrichtung in axialer Richtung des Kommutators weitestgehend verhindert und eine Drehbewegung in Unfangrichtung des Kommutators über einen definierten Winkelbereich gestattet wird. Dabei ist die axiale Führung aus zumindest einem Vorsprung und/oder aus zumindest einer Nut am äußeren Umfang der Montagevorrichtung gebildet, wobei der Vorsprung der Montagevorrichtung in eine entsprechende Nut des Bürstenträgers bzw. ein Vorsprung des Bürstenträgers in die Nut der Montagevorrichtung eingreift. Alternativ kann die axiale Führung auch in Umfangsrichtung der Montagevorrichtung angeordnete Langlöcher aufweisen, in die ein entsprchender Vorsprung des Bürstengrägers eingreift.

In besonders vorteilhafter Weise bewirkt die axiale Führung und/oder ein weiteres Führungselement ein Einsetzen der Montagevorrichtung in den Bürstenträger mit einer vordefinierten Ausgangsposition, so dass ein Verdrehen der Montagevorrichtung nur in eine Vorzugsgrichtung möglich ist, um die Bürsten freizugeben.

Damit die Montagevorrichtung sich nach der Freigabe der Bürsten nicht selbsttätig wieder derart zurückdrehen kann, dass sie seitlich gegen die Bürsten stößt, weist sie ein Rastelement zur Verrastung am Bürstenträger und/oder an einem Gehäuse des Kommutatormotors auf. Dabei ist das Rastelement in vorteilhafter Weise vorgespannt, so dass es nach der Freigabe der Bürsten in eine Öffnung des Bürstenträgers und/oder des Gehäuses eingreift.

Um Gewicht zu sparen, ist die Montagvorrichtung als ein Kunststoffteil ausgebildet. Da die Montagevorrichtung nur verdreht und nicht axial weggeschoben wird, ist aber auch möglich, dass sie als ein Abschirmelement zur Abschirmung elektromagnetischer Strahlungen dient, die beispielsweise durch das so genannte Bürstenfeuer während des Kommutierungsvorgangs, d.h. beim Übergang einer Bürste von einer auf die nächste Bürstenlamelle, hervorgerufen werden. In diesem Fall ist er weiterhin von Vorteil, wenn das Abschirmelement innenseitig metallbedampft und mit einem elektrischen Spannungspotential verbunden ist.

### Zeichnung

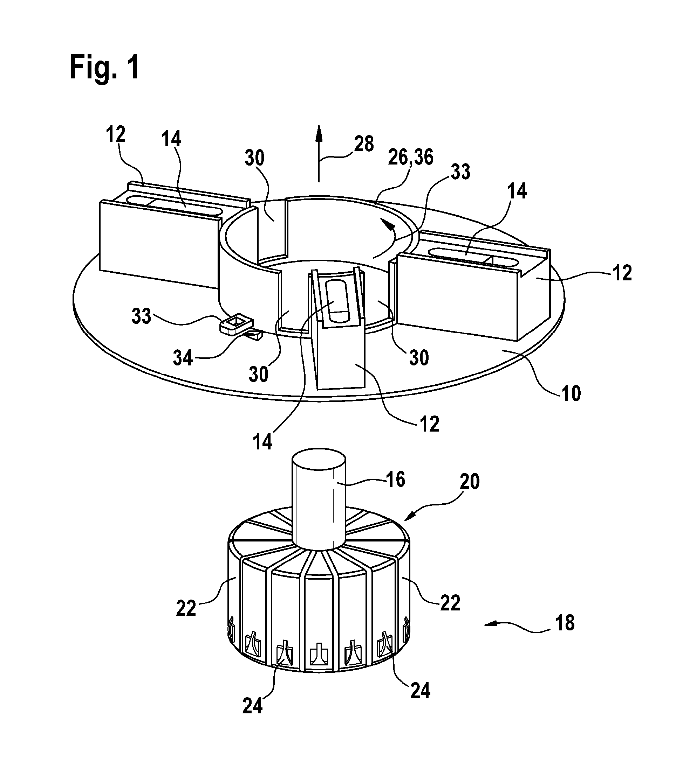

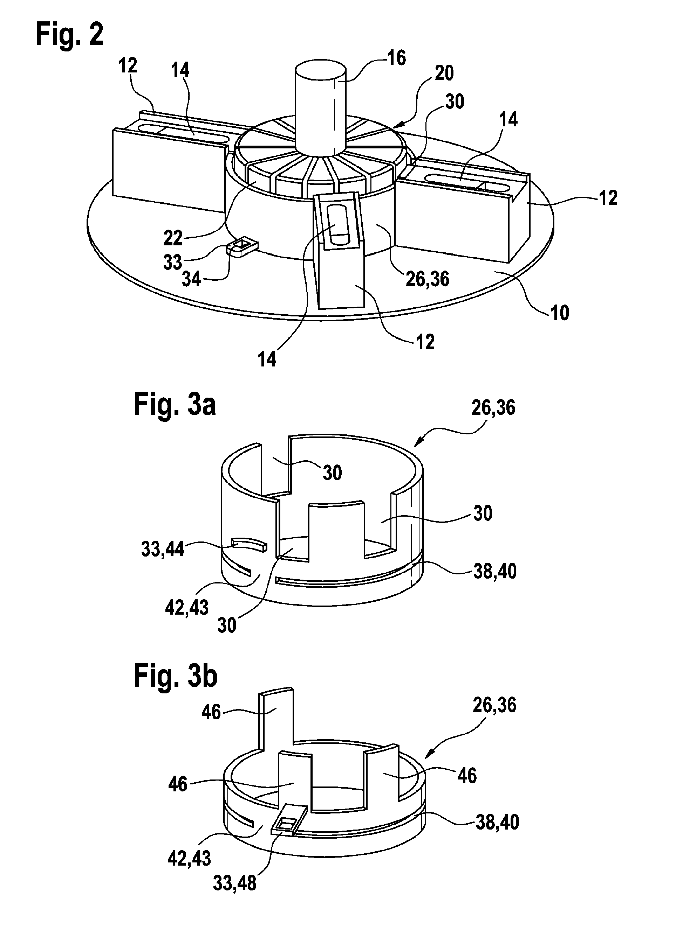

Die Erfindung wird im Folgenden anhand der Figuren 1 und 2 beispielhaft erläutert, wobei gleiche Bezugszeichen in den Figuren auf gleiche Bestandteile mit einer gleichen Funktionsweise hindeuten. Die Figuren der Zeichnung, deren Beschreibung sowie die Ansprüche enthalten zahlreiche Merkmale in Kombination. Ein Fachmann wird diese Merkmale auch einzeln betrachten und zu weiteren sinnvollen Kombinationen zusammenfassen. Insbesondere wird ein Fachmann auch die Merkmale aus unterschiedlichen Ausführungsbeispielen zu weiteren sinnvollen Kombinationen zusammenfassen.

Es zeigen
Fig. 1: ein erstes Ausführungsbeispiel des erfindungsgemäßen Kommutatormotors vor der Montage,
Fig. 2: ein erstes Ausführungsbeispiel des erfindungsgemäßen Kommutatormotors nach der Montage
Fig. 3: ein erstes und ein zweites Ausführungsbeispiel der erfindungsgemäßen Montagevorrichtung (),
Fig. 4: ein drittes und ein viertes Ausführungsbeispiel der erfindungsgemäßen Montagevorrichtung (),
Fig. 5: ein fünftes und ein sechstes Ausführungsbeispiel der erfindungsgemäßen Montagevorrichtung (),
Fig. 6: ein zweites Ausführungsbeispiel des erfindungsgemäßen Kommutatormotors vor der Montage und
Fig. 7: ein zweites Ausführungsbeispiel des erfindungsgemäßen Kommutatormotors nach der Montage.

In Figur 1 ist ein erstes Ausfürhungsbeispiel des erfindungsgemäßen Kommutatormotors vor der Montage gezeigt. Auf einem Bürstenträger 10 sind drei in Köchern 12 radial verschiebbar gelagerte Bürsten 14 angeordnet. Die Köcher 12 weisen geeignete Andruckmittel - beispielsweise Federn (nicht gezeigt) oder dergleichen - auf, die die Bürsten 14 derart mit einer Federkraft beaufschlagen, dass ihre Stirnflächen in der entspannten Ruhelage radial in Richtung des Mittelpunktes einer Ankerwelle 16 eines Ankers 18 des Kommutatormotors den gedachten Hüllkreis der Oberfläche eines mit der Ankerwelle 16 drehfest verbundenen Kommutators 20 überschreiten. Dabei wird die Oberfläche aus einer Mehrzahl von Kommutatorlamellen 22 des Kommutators 20 gebildet. Diese sind über Kommutatorhaken 24 mit den nicht gezeigten Ankerwicklungen des Ankers 18 elektrisch verbunden. Ohne Einschränkung der Erfindung können natürlich auch andere Kontaktmittel wie Lötungen etc. an den Kommutatorlamellen 22 zur Verbindung mit den Ankerwicklungen angebracht sein. Weiterhin sei erwähnt, dass die Erfindung selbstverständlich nicht auf einen Kommutatormotor mit drei Bürsten beschränkt ist. Ebenso kann sie auch auf einen Kommutatormotor mit nur zwei oder mehr als drei Bürsten angewendet werden, wobei die Anzahl der Bürsten vom jeweiligen Einsatzgebiet des Kommutatormotors abhängt. So ist beispielsweise der hier gezeigte Kommutatormotor für zwei verschiedene Drehzahlen ausgelegt, wie sie insbesondere in Verbindung mit Scheibenwischer-Antrieben zum Einsatz kommen.

Eine im Wesentlichen zylinderförmige Montagevorrichtung 26 ist derart in Umfangrichtung des Kommutators 20 drehbar am Bürstenträger 10 befestigt, dass sie die Bürsten 14 vor dem Einbringen des Kommutators 20 in Richtung des Pfeils 28 zurückhält. Die Montagevorrichtung 26 weist zudem eine der Anzahl der Bürsten 14 entsprechende Anzahl von Aussparungen 30 auf, die die Bürsten 14 nach dem Verdrehen der Montagehilfe 26 in Richtung des Pfeils 32 und dem Einbringen des Kommutators 20 zum Anpressen durch die Andruckmittel freigeben, so dass diese in Kontakt mit den Kommutatorlamellen 22 des Kommutatos 20 treten können.

In Figur 2 ist der Kommutatormotor gemäß Figur 1 nach dem Einbringen des Kommutators 20 in den Bürstenträger 10 dargestellt. Die Montagevorrichtung 26 ist nun derart in Richtung des Pfeils 32 über einen definierten Winkelbereich verdreht worden, dass die Bürsten 30 durch die Aussparungen 30 hindurch in Kontakt mit den Kommutatorlamellen 22 treten, wodurch eine Kommutierung der Ankerwicklungen ermöglicht ist. Um ein Zurückdrehen des Montagevorrichtung 26 und damit einen ungewollten seitlichen Kontakt mit den Bürsten 14 sowie eine daraus resultierende Geräuschentwicklung zu verhindern, weist die Montagevorrichtung 26 ein Rastelement 33 zur Verrastung mit einem entsprechenden Gegenstück 34 am Bürstenträger 10 auf. Dabei kann das Rastelement 33 beispielsweise in Form einer mit einer Aussparung versehenen Zunge ausgestaltet sein, die eine Verrastung mit einem an dem Bürstenträger 10 angebrachten Keil oder dergleichen als Gegenstück 34 bewirkt.

Da der Kommutator 20 nun in Umfangsrichtung nahezu vollständig abgedeckt ist, eignet sich die Montagevorrichtung 26 auch sehr gut als ein Abschirmelement 36 gegen das bei einem Kommutatormotor während der Kommutierung auftretende Bürstenfeuer, das seinerseits zu elektromagnetischen Störstrahlungen führt. Dazu ist die aus Gewichtsgründen vorzugsweise aus Kunstoff hergestellte Montagevorrichtung 26 innenseitig metallbedampft und mit einem nicht gezeigten, elektrischen Spannungspotential, beispielsweise ein Massepotential, verbunden.

Die Figuren 3 bis 5 zeigen sechs verschiedene Ausführungsbeispiele der Montagevorrichtung 26. In den Figuren 3a, 4a und 5a ist die Montagevorrichtung 26 entsprechend der Figuren 1 und 2 dargestellt. Zu erkennen sind die Aussparungen 30 zur Freigabe der Bürsten 14 nach dem Verdrehen. Gemäß Figur 3a dient eine axiale Führung 38 in Form einer oder mehrerer am äußeren Umfang der Montagevorrichtung 26 umlaufender Nuten 40 zur Sicherung der Montagevorrichtung 26 in axialer Richtung des Kommutators 20, wobei zumindest ein Vorsprung des Bürstenträgers 10 in jede Nut 40 eingreift. Ein zu weites Verdrehen der Montagevorrichtung 26 über die gewünschte Lage hinaus kann beispielsweise durch einen entsprechenden, ebenen Steg 42 in der Nut 40 vermieden werden. Zusätzlich dient der Steg 42 bzw. eine Mehrzahl von Stegen 42 als ein weiteres Führungselement 43, das ein Einsetzen der Montagevorrichtung 26 in den Bürstenträger 10 mit einer vordefinierten Ausgangsposition bewirkt. Als Rastelement 32 dient in Figur 3a ein Federelement 44, das entsprechend vorgespannt ist und nach der Freigabe der Bürsten 14 in eine als Gegenstück 34 dienenden Öffnung des Bürstenträgers 10 eingreift. Alternativ oder ergänzend kann das Rastelement 32 auch in ein entsprechendes Gegenstück eines Gehäuses des Kommutatormotors eingreifen.

Die in Figur 3b gezeigte Montagevorrichtung 26 unterscheidet sich von derjeniegen in Figur 3a im Wesentlichen dadurch, dass die Bürsten nun durch Haltezungen 46, deren Anzahl der der Bürsten 14 entspricht, zurückgehalten werden. Durch ein Verdrehen der Montagevorrichtung 26 in die in der Figur 1 angegebenen Drehrichtung gemäß dem Pfeil 32 werden die Bürsten dann freigegeben und können mit den Kommutatorlamellen 22 in Kontakt treten. Das Rastelement 32 entspricht demjeniegen der Montagevorrichtung 26 gemäß der Figuren 1 und 2 und ist als eine Zunge 48 mit einer Aussparung ausgestaltet, wobei beispielsweise ein Keil als Gegenstück 34 des Bürstenträgers 10 oder des Gehäuses in die Aussparung eingreift und ein Verdrehen entgegen der Richtung des Pfeils 32 verhindert.

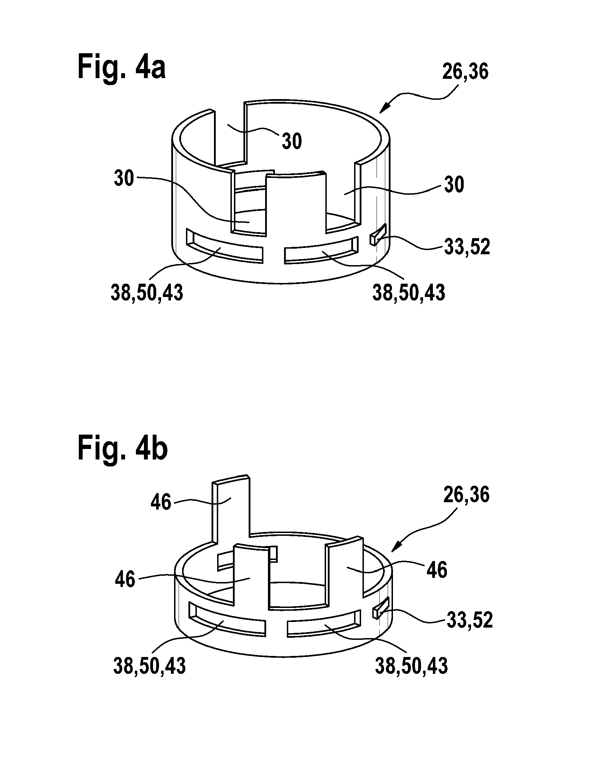

Figur 4 zeigt ein drittes und viertes Ausführungsbeispiel der erfindungsgemäßen Montagevorrichtung 26. Als axiale Führung 38 dient in diesem Fall eine Mehrzahl von in Umfangsrichtung der Montagevorrichtung 26 angeordneten Langlöchern 50, in die entsprechende Vorsprünge des Bürstenträgers 10 eingreifen. Die Langlöcher 50 bzw. die Stege zwischen den Langlöchern 50 können auch als weiteres Führungselement 43 für ein Einsetzen der Montagevorrichtung 26 in den Bürstenträger 10 mit einer vordefinierten Ausgangsposition dienen. Als Rastelement 33 fungiert ein seitlich an der Montagevorrichtung 26 angebrachter Keil 52, der ein Verdrehen entgegen der Richtung des Pfeils 32 nach Freigabe der Bürsten 14 und damit eine seitliche Berührung zu den Bürsten 14 verhindert. Die beiden Ausführungsbeispiele gemäß der Figuren 4a und 4b unterscheiden sich durch die Verwendung von Aussparungen 30 zum Freigeben der Bürsten 14 in Figur 4a und Haltezungen 46 zum Zurückhalten der Bürsten 14 in Figur 4b.

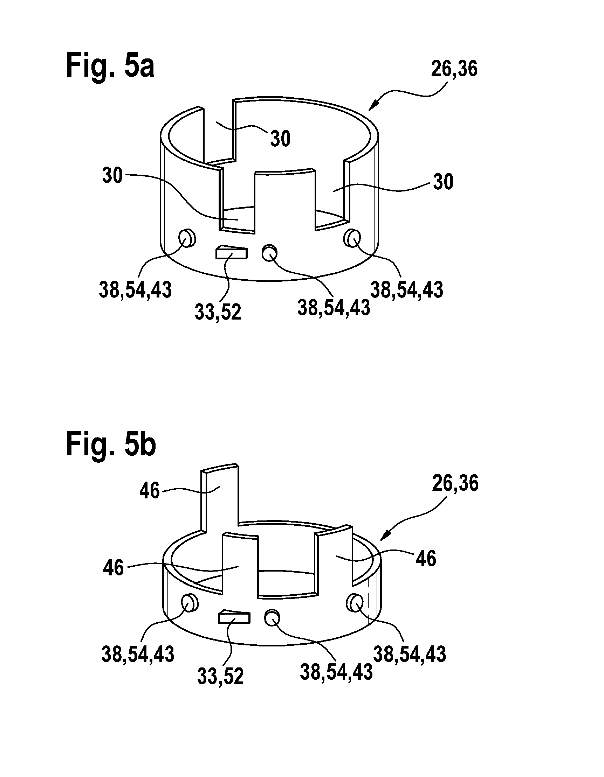

In Figur 5 ist ein fünftes und ein sechstes Ausführungsbeispiel der erfindungsgemäßen Montagevorrichtung 26 gezeigt. Im Unterschied zu den Figuren 3 und 4 sind die axialen Führungen 38 durch mehrere Vorsprünge 54 am äußeren Umfang der Montagevorrichtung 26 gebildet, die zudem auch als weiteres Führungselement 43 für ein Einsetzen der Montagevorrichtung 26 in den Bürstenträger 10 mit einer vordefinierten Ausgangsposition dienen können. Wie in Figur 4 so dient ein seitlich an der Montagevorrichtung 26 angebrachter Keil 52 als Rastelement 33, der ein Verdrehen entgegen der Richtung des Pfeils 32 nach Freigabe der Bürsten 14 und damit eine seitliche Berührung zu den Bürsten 14 verhindert. Die beiden Ausführungsbeispiele gemäß der Figuren 5a und 5b unterscheiden sich durch die Verwendung von Aussparungen 30 zum Freigeben der Bürsten 14 in Figur 5a und Haltezungen 46 zum Zurückhalten der Bürsten 14 in Figur 5b.

Vorzugsweise sind die in den Figuren 3 bis 5 gezeigten Montagevorrichtungen 26 als Kunststoffteile ausgebildet, die zudem als Abschirmelemente 36 gegen elektromagnetische Strahlungen eingesetzt werden können, wobei diese dann innenseitig metallbedampft und mit einem elektrischen Spannungspotential, beispielsweise einem Massepotential, verbunden sind.

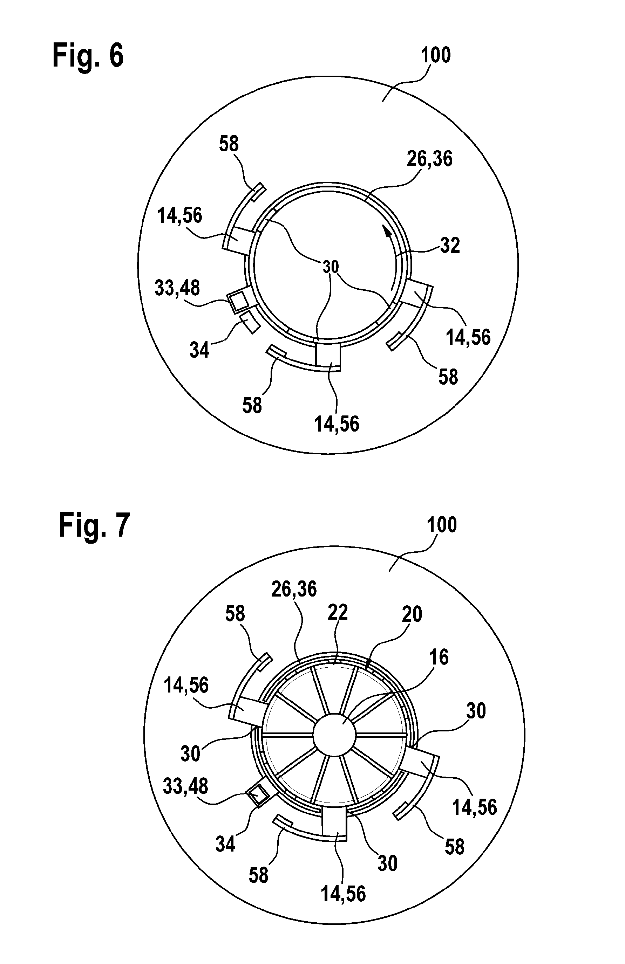

In Figur 6 ist ein Bürstenträger 100 in einer Draufsicht vor der Montage des Ankers bzw. Kommutators als zweites Ausführungsbeispiel des erfindungsgemäßen Kommutatormotors dargestellt, wobei die Bürsten 14 nun als Hammerbürsten 56 ausgebildet sind, die über geeignete und mit dem Bürstenträger 10 fest verbundene Andruckmittel 58 derart mit einer Federkraft beaufschlagt werden, dass ihre Stirnflächen in der entspannten Ruhelage radial in Richtung des Ankerwellenmittelpunktes den gedachten Hüllkreis der Kommutatoroberfläche überschreiten. Dabei wirkt die Montagevorrichtung 26 der Federkraft entgegen, indem sie die Bürsten vor dem Einbringen des Ankers zurückhält. Wie zu erkennen ist, umgibt die Aussparung des als Zunge 48 ausgebildeten Rastelements 33 noch nicht den an dem Bürstenträger 10 angebrachten und als Gegenstück dienenenden Keil zum Zwecke einer Verrastung entgegen der Richtung des Pfeils 32, so dass ein Verdrehen der Montagevorrichtung 26 über einen definierten Winkelbereich möglich ist.

In Figur 7 ist der Kommutator 20 in den Bürstenträger 100 eingebracht. Die Montagevorrichtung 26 wurde derart in Richtung des Pfeils 32 verdreht, dass die als Hammerbürsten 56 ausgestalteten Bürsten 14 durch die Aussparungen 30 der Montagevorrichtung 26 hindurch mittels der Andruckmittel 58 gegen die Kommutatorlamellen 22 gedrückt werden und mit ihnen in einen elektrischen Kontakt treten. Weiterhin sind das Rastelement 33 und das entsprechende Gegenstück 34 miteinander verrastet, so dass eine Drehung entgegen der Richtung des Pfeils 32 nicht mehr möglich ist und eine seitliche Berührung der Bürsten 14 vermieden wird.

Auch die Montagevorrichtung 26 gemäß der Figuren 6 und 7 kann für den Fall, dass sie innenseitig metallbedampft ist, als Abschirmelement 36 gegen elektromagnetische Strahlungen dienen. Vorzugsweise ist dabei eine elektrische Verbindung mit einem elektrischen Spannungspotential vorzusehen.

Es sei abschließend noch darauf hingewiesen, dass die gezeigten Ausführungsbeispiele weder auf die Figuren 1 bis 7 noch auf die gezeigte Drehrichtung, die Anordnung der axialen Führungen 38 und der Rastelemente 33 oder die Anzahl der Aussparungen 30 bzw. der Haltezungen 46 und der Bürsten 14 beschränkt ist. So kann beispielsweise in Abhängigkeit von der Anzahl oder der Positionierung der Bürsten eine entsprechende Modifikation der Montagevorrichtung 26 notwendig sein. Zudem kann es vorteilhaft sein, mehrere Rastelemente 33 bzw. Gegenstücke 34 zur Verrastung der Montagevorrichtung 26 vorzusehen. Da dem Fachmann der genaue Aufbau eines Kommutatormotors bekannt ist, wurde darüber hinaus auf dessen exakte Beschreibung, beispielsweise der elektrischen Verbindung von einem Anschlussterminal zu den Bürsten oder der Ansteuerelektronik, verzichtet.

## Patentansprüche

1. Kommutatormotor mit einem eine Mehrzahl von Kommutatorlamellen (22) aufweisenden, auf einer Ankerwelle (16) eines Ankers (18) drehfest montierten Kommutator (20) und mit auf einem Bürstenträger (10, 100) montierten Bürsten (14, 56), die mittels Andruckmitteln (58) an die Kommutatorlamellen (22) anpressbar sind, **dadurch gekennzeichnet, dass** eine Montagevorrichtung (26) in Umfangrichtung des Kommutators (20) drehbar am Bürstenträger (10) befestigt ist, wobei die Montagevorrichtung (26) die Bürsten (14) vor dem Einbringen des Ankers (18) zurückhält, und nach dem Einbringen des Ankers (18) derart drehbar ist, dass sie die Bürsten (14) zum Anpressen durch die Andruckmittel (58) an die Kommutatorlamellen (22) freigibt.

2. Kommutatormotor nach Anspruch 1, **dadurch gekennzeichnet, dass** die Montagevorrichtung (26) Aussparungen (30) zur Freigabe der Bürsten (14) und/oder Haltezungen (46) zum Zurückhalten der Bürsten (14) aufweist.

3. Kommutatormotor nach einem der vorhergehenden Ansprüche, **dadurch gekennzeichnet, dass** die Montagevorrichtung (26) eine axiale Führung (38) aufweist, die die Montagevorrichtung (26) in axialer Richtung des Kommutators (20) sichert und eine Drehbewegung in Unfangrichtung des Kommutators (20) gestattet.

4. Kommutatormotor nach Anspruch 3, **dadurch gekennzeichnet, dass** die axiale Führung (38) aus zumindest einem Vorsprung (54) am äußeren Umfang der Montagevorrichtung (26) gebildet ist.

5. Kommutatormotor nach Anspruch 3, **dadurch gekennzeichnet, dass** die axiale Führung (38) aus zumindest einer Nut (40) am äußeren Umfang der Montagevorrichtung (26) gebildet ist, in die zumindest ein Vorsprung des Bürstenträgers (10, 100) eingreift.

6. Kommutatormotor nach Anspruch 6, **dadurch gekennzeichnet, dass** die axiale Führung (38) in Umfangsrichtung der Montagevorrichtung (26) angeordnete Langlöcher (50) aufweist.

7. Kommutatormotor nach einem der vorhergehenden Ansprüche 3 bis 6, **dadurch gekennzeichnet, dass** die axiale Führung (38) und/oder ein weiteres Führungselement (43) ein Einsetzen der Montagevorrichtung (26) in den Bürstenträger (10, 100) mit einer vordefinierten Ausgangsposition bewirkt.

8. Kommutatormotor nach einem der vorhergehenden Ansprüche, **dadurch gekennzeichnet, dass** die Montagevorrichtung (26) ein Rastelement (33) aufweist zur Verrastung der Montagevorrichtung (26) am Bürstenträger (10, 100) und/oder an einem Gehäuse des Kommutatormotors nach der Freigabe der Bürsten (14).

9. Kommutatormotor nach Anspruch 8, **dadurch gekennzeichnet, dass** das Rastelement (33) vorgespannt ist und nach der Freigabe der Bürsten (14) in eine Öffnung des Bürstenträgers (10, 100) und/oder des Gehäuses eingreift.

10. Kommutatormotor nach einem der vorhergehenden Ansprüche, **dadurch gekennzeichnet, dass** die Montagvorrichtung (26) ein Kunststoffteil ist.

11. Kommutatormotor nach einem der vorhergehenden Ansprüche, **dadurch gekennzeichnet, dass** die Montagevorrichtung (26) als Abschirmelement (36) dient.

12. Kommutatormotor nach Anspruch 11, **dadurch gekennzeichnet, dass** das Abschirmelement (36) innenseitig metallbedampft und mit einem elektrischen Spannungspotential verbunden ist.

13. Verfahren zur Montage eines Kommutatormotors mit einem eine Mehrzahl von Kommutatorlamellen (22) aufweisenden, auf einer Ankerwelle (16) eines Ankers (18) drehfest montierten Kommutator (20) und mit auf einem Bürstenträger (10, 100) montierten Bürsten (14), die mittels Andruckmitteln (58) an die Kommutatorlamellen (22) anpressbar sind, **dadurch gekennzeichnet, dass** die Bürsten (14) vor dem Einbringen des Ankers (18) durch eine in Umfangsrichtung des Kommutators (20) drehbar am Bürstenträger (10, 100) befestigte Montagevorrichtung (26) in einer Montageposition gehalten werden, und dass die Montagevorrichtung (26) nach dem Einbringen des Ankers (18) derart gedreht wird, dass die Bürsten zum Anpressen durch die Andruckmittel (58) an die Kommutatorlamellen (22) freigegeben werden.

14. Verfahren nach Anspruch 13, **dadurch gekennzeichnet, dass** die Montagevorrichtung (26) nach Freigabe der Bürsten (14) mittels eines Rastelements (33) am Bürstenträger (10, 100) und/oder an einem Gehäuse des Kommutatormotors verrastet wird.

15. Verfahren nach Anspruch 14, **dadurch gekennzeichnet, dass** das Rastelement (33) in eine Öffnung des Bürstenträgers (10, 100) und/oder des Gehäuses eingreift.

16. Verfahren nach einem der vorhergehenden Ansprüche 13 bis 15, **dadurch gekennzeichnet, dass** die Montagevorrichtung (26) vor dem Einbringen des Ankers (18) in den Bürstenträger (10, 100) eingesteckt wird, wobei mittels einer axialen Führung (38) eine Bewegung der Montagevorrichtung (26) in axialer Richtung des Kommutators (20) weitestgehend verhindert und eine Drehbewegung in Unfangrichtung des Kommutators (20) über einen definierten Winkelbereich gestattet wird.
